# EUROPEAN PATENT SPECIFICATION

(11) **EP 4 421 079 B1**
(45) Date of publication and mention of the grant of the patent: **07.05.2025**
(21) Application number: 23164916.1
(22) Date of filing: 29.03.2023
(51) Int. Cl.: C07F 5/02

(54) **PREPARATION METHOD OF BORON TRIFLUORIDE-ISOPROPYLAMINE COMPLEX**
VERFAHREN ZUR HERSTELLUNG EINES BORTRIFLUORID-ISOPROPYLAMIN-KOMPLEXES
PROCÉDÉ DE PRÉPARATION D'UN COMPLEXE TRIFLUORURE DE BORE-ISOPROPYLAMINE

(30) Priority: 23.02.2023 CN 202310160796
(43) Date of publication of application: 28.08.2024
(73) Proprietor: Shandong Heyi Gas Co., Ltd., Dongying City, Shandong Province 257500 (CN)
(72) Inventor: YANG, Jun, Dongying City, 257500 (CN); FANG, Jitao, Dongying City, 257500 (CN); ZHONG, Jie, Dongying City, 257500 (CN); QIN, Tao, Dongying City, 257500 (CN); WANG, Zhejun, Dongying City, 257500 (CN); YAN, Xiuxiang, Dongying City, 257500 (CN)
(74) Representative: Moré, Solveig Helga

(56) References cited:
- FEDNEVA, E. M.; ALPATOVA, V. I.; MIKHEEVA, V. I.: "Reaction of diborane with isopropylamine and ethylenediamine", ZHURNAL NEORGANICHESKOI KHIMII, vol. 9, no. 1, 1 January 1964 (1964-01-01), pages 56 - 59, XP009547256, ISSN: 0044-457X

## Description

### TECHNICAL FIELD

The present disclosure relates to the technical field of organic synthesis, in particular to a preparation method of a boron trifluoride-isopropylamine complex.

### BACKGROUND

Isopropylamine is mainly used in the synthesis of pesticides, pharmaceuticals, and dyes, as well as rubber processing. Isopropylamine can also be used as emulsifiers, detergents, abstergents, depilatories, hard water treatment agents, surfactants, and textile auxiliaries. Therefore, the isopropylamine has a wide application and a high consumption. However, due to an extremely-low boiling point of only about 33°C, isopropylamine is volatile, resulting in relatively great danger during storage and transportation.

FEDNEVA, E. M. et al.("Reaction of diborane with isopropylamine and ethylenediamine", ZHURNAL NEORGANICHESKOI KHIMII, vol. 9, no. 1, 1 January 1964 (1964-01-01), pages 56-59) discloses a process for the preparation of an isopropylamine complex wherein diborane is reacted with a solution of isopropylamine in benzene.

### SUMMARY

An objective of the present disclosure is to provide a preparation method of a boron trifluoride-isopropylamine complex. In the present disclosure, the solid boron trifluoride-isopropylamine complex is prepared by a one-step method, has a desirable crystal form and a high melting point, and is convenient for storage and transportation.

To achieve the above objective, the present disclosure provides the following technical solutions:
The present disclosure provides a preparation method of a boron trifluoride-isopropylamine complex, including the following steps:
mixing isopropylamine with a chlorinated alkane to obtain an isopropylamine solution; and
introducing boron trifluoride into the isopropylamine solution, and conducting complexation to obtain the boron trifluoride-isopropylamine complex;
wherein the isopropylamine and the chlorinated alkane are at a mass ratio of 1:(2-10).

Preferably, the chlorinated alkane is selected from the group consisting of dichloromethane, 1,1-dichloroethane, and 1,2-dichloroethane.

Preferably, the isopropylamine and the boron trifluoride are at a molar ratio of 1:(0.95-1.05).

Preferably, the boron trifluoride is introduced at a gas flow rate of 0.3 kg/h to 80 kg/h.

Preferably, the complexation is conducted at -10°C to 15°C for 3 h to 24 h.

Preferably, the complexation is conducted under stirring at 50 r/min to 200 r/min.

Preferably, the preparation method further includes the following steps after the complexation is completed: subjecting a obtained product system obtained after the complexation to solid-liquid separation, and drying a resulting solid material to obtain the boron trifluoride-isopropylamine complex.

Preferably, the drying is conducted at 40°C to 80°C for 2 h to 5 h.

Preferably, an obtained liquid material after the solid-liquid separation is recycled.

The present disclosure provides a preparation method of a boron trifluoride-isopropylamine complex, including the following steps: mixing isopropylamine with a chlorinated alkane to obtain an isopropylamine solution; and introducing boron trifluoride into the isopropylamine solution, and conducting complexation to obtain the boron trifluoride-isopropylamine complex; wherein the isopropylamine and the chlorinated alkane are at a mass ratio of 1:(2-10). In the present disclosure, the solid boron trifluoride-isopropylamine complex is prepared through a one-step method. The chlorinated alkane is used as a solvent to remove the unreacted isopropylamine in the product boron trifluoride-isopropylamine complex. This avoids self-dissolution of the raw material in the product or melting of the product due to a relatively melting point of the raw materials, such that the product is not loose and sticky. Accordingly, the boron trifluoride-isopropylamine complex prepared by the preparation method of the present disclosure has a desirable crystal form and a high melting point of not less than 95°C, and is convenient for storage, transportation, and use. Therefore, the complex shows higher comprehensive social benefits.

Moreover, the chlorinated alkane can be recycled, which is beneficial to reduce costs and environmental protection pressure.

### DETAILED DESCRIPTION OF THE EMBODIMENTS

The present disclosure provides a preparation method of a boron trifluoride-isopropylamine complex, including the following steps:
mixing isopropylamine with a chlorinated alkane to obtain an isopropylamine solution; and
introducing boron trifluoride into the isopropylamine solution, and conducting complexation to obtain the boron trifluoride-isopropylamine complex;
wherein the isopropylamine and the chlorinated alkane are at a mass ratio of 1:(2-10).

In the present disclosure, isopropylamine is mixed with a chlorinated alkane to obtain an isopropylamine solution. In the present disclosure, the chlorinated alkane is preferably selected from the group consisting of dichloromethane, 1,1-dichloroethane, and 1,2-dichloroethane. The chlorinated alkane is specifically an anhydrous chlorinated alkane (with a moisture content of not greater than 300 ppm). The complexation of boron trifluoride and isopropylamine is an exothermic reaction. During the reaction, the temperature is easy to rise, and the isopropylamine itself has a relatively low boiling point. If a boron trifluoride gas is introduced directly into the isopropylamine to prepare the boron trifluoride-isopropylamine complex: in the actual production, the isopropylamine is volatile and causes a pressure in the reactor to rise, and a high pressure is not conducive to ensuring a smooth progress of the complexation. Meanwhile, if the boron trifluoride gas is directly fed into the isopropylamine to produce a solid: on one hand, it is not easy to discharge in the actual production, and the raw materials cannot be converted 100%, resulting in the waste of some raw materials. On the other hand, the product has a poor crystal form (in a soft state like the cotton wool) and a low melting point, and is easy to melt. This may be because that if the boron trifluoride gas is directly introduced into the isopropylamine to conduct complexation, a small part of the raw material isopropylamine may be remained in the product. Due to the low melting point and boiling point of isopropylamine, the product may self-dissolve, resulting in its melting. The chlorinated alkane as a solvent can dissolve the isopropylamine. An obtained isopropylamine solution has a higher boiling point than that of the isopropylamine, which helps to reduce the danger caused by the low boiling point of isopropylamine during the production. Moreover, the chlorinated alkane does not dissolve the product boron trifluoride-isopropylamine complex. The product can be precipitated during the complexation, and can be obtained by simple solid-liquid separation after the complexation. The preparation method has simple operations and a desirable crystal form of the product (in a state of gravel). In addition, a liquid material obtained from the solid-liquid separation can be recycled, which is conducive to reducing costs and environmental protection pressure, and has high comprehensive social benefits.

In the present disclosure, the isopropylamine and the chlorinated alkane are at a mass ratio of 1:(2-10), specifically 1:2, 1:3, 1:4, 1:5, 1:6, 1:7, 1:8, 1:9, or 1:10. If the amount of chlorinated alkane is too small, the isopropylamine solution is more viscous, which may cause the materials in the reactor to condense and cannot be discharged during the actual production. Moreover, the obtained material is more difficult to dry after the complexation is completed. Meanwhile, considering that the liquid material from solid-liquid separation is recycled, excess 1,2-dichloroethane may also have a negative impact on the actual recycling effect. This is because that if the amount of 1,2-dichloroethane is too much, a number of recycling is high, such that moisture in the air may enter the solvent during use. Due to a high moisture content, the solvent cannot be used, and needs to be distilled to remove the moisture. This not only increases the processing steps, but also wastes energy. Preferably, the mass ratio of isopropylamine and chlorinated alkane is controlled within the above range, which is beneficial to ensure the smooth progress of the complexation and a better recycling effect of the chlorinated alkane.

In the present disclosure, boron trifluoride is introduced into the isopropylamine solution, and complexation is conducted to obtain the boron trifluoride-isopropylamine complex. The isopropylamine and the boron trifluoride are at a molar ratio of preferably 1:(0.95-1.05), more preferably 1:(0.98-1.02). The boron trifluoride is introduced at a gas flow rate of preferably 0.3 kg/h to 80 kg/h. Specifically, when a small test is conducted, the gas flow rate may be 0.3 kg/h to 2 kg/h, more preferably 0.3 kg/h to 0.5 kg/h. During mass production, the gas flow rate can be 10 kg/h to 80 kg/h, more preferably 20 kg/h to 50 kg/h. If the boron trifluoride has an excessively low gas flow rate, there is a low complexation rate. If the boron trifluoride has an excessively high gas flow rate, the complexation is exothermic dramatically. This may cause the temperature of the materials to rise rapidly, which is not conducive to the stable control of the reaction temperature.

In the present disclosure, the complexation is conducted at preferably -10°C to 15°C, more preferably -5°C to 0°C. If a complexation temperature is too low, a complexation rate may be slow. If the complexation temperature is too high, because of the low boiling point and volatile nature of isopropylamine, the pressure in the reactor may increase during the actual production, which is highly dangerous. Moreover, it is easy to make the complexation become gas-gas complexation, causing the solid product to adhere to an inner wall of the reactor, and it is impossible to realize discharging. The complexation is conducted for preferably 3 h to 24 h, more preferably 5 h to 8 h. The time of the complexation is specifically measured by a time when the boron trifluoride is started to be introduced.

In the present disclosure, the complexation is preferably conducted under stirring at preferably 50 r/min to 200 r/min. An excessively low stirring rate is not conducive to the smooth progress of the complexation; an excessively high stirring rate may cause liquid splashing and is not conducive to crystallization. During the complexation, a solid can be precipitated in the system. Before the solid is precipitated, the stirring rate is preferably 100 r/min to 200 r/min, more preferably 130 r/min to 150 r/min. After the solid is precipitated, the stirring rate is reduced to preferably 50 r/min to 150 r/min, more preferably 60 r/min to 80 r/min. In this way, the product is slowly crystallized to ensure well crystal precipitation, and a boron trifluoride-isopropylamine complex with desirable crystal form is obtained.

In the present disclosure, during the complexation, the isopropylamine reacts with the boron trifluoride as follows:

C₃H₉N + BF₃ = C₃H₉N·BF₃

In the present disclosure, the preparation method further includes preferably the following steps after the complexation is completed: subjecting a obtained product system obtained after the complexation to solid-liquid separation, and drying a resulting solid material to obtain the boron trifluoride-isopropylamine complex. The drying is conducted at preferably 40°C to 80°C, more preferably 50°C to 60°C for preferably 2 h to 5 h, more preferably 3 h to 4 h. The liquid material obtained after the solid-liquid separation is preferably recycled.

In the present disclosure, the boron trifluoride-isopropylamine complex prepared by the preparation method has a moisture content of 0.1002 wt% to 0.1261 wt%, a boron trifluoride content of 50.0 wt% to 51.3 wt%, and a melting point of 98°C to 103°C. The product has a desirable crystal form and is in the state of gravel, and shows a yield of 92.0% to 96.0%.

The technical solutions of the present disclosure will be clearly and completely described below with reference to the examples of the present disclosure. Apparently, the described examples are only a part of, not all of, the examples of the present disclosure. All other examples obtained by a person of ordinary skill in the art based on the examples of the present disclosure without creative efforts shall fall within the protection scope of the present disclosure.

### Example 1

50 g of isopropylamine was added into a 500 mL three-phase bottle, and 100 g of 1,2-dichloroethane was added according to a mass ratio of the isopropylamine to the 1,2-dichloroethane at 1:2. Stirring was conducted at 150 r/min, and 57 g of boron trifluoride gas was introduced at a gas flow rate of 0.5 kg/h to obtain a reaction system. Complexation was conducted at 0°C, and after solids appeared in the reaction system, the stirring was slowed down to 60 r/min to allow a product to get crystallized slowly. Since the boron trifluoride gas was introduced at the beginning, no solid was precipitated when the complexation was conducted for 5 h. An obtained product system was filtered (a resulting mother liquor was recycled), and an obtained solid material was dried at 50°C for 3 h to obtain 100.58 g of the solid product with a yield of 94.0%. The product had a desirable crystal form and was in a gravel-like state.

### Example 2

50 g of isopropylamine was added into a 500 mL three-phase bottle, and 250 g of 1,2-dichloroethane was added according to a mass ratio of the isopropylamine to the 1,2-dichloroethane at 1:5. Stirring was conducted at 150 r/min, and 57 g of boron trifluoride gas was introduced at a gas flow rate of 0.5 kg/h to obtain a reaction system. Complexation was conducted at 0°C, and after solids appeared in the reaction system, the stirring was slowed down to 60 r/min to allow a product to get crystallized slowly. Since the boron trifluoride gas was introduced at the beginning, no solid was precipitated when the complexation was conducted for 5 h. An obtained product system was filtered (a resulting mother liquor was recycled), and an obtained solid material was dried at 50°C for 3 h to obtain 102.70 g of the solid product with a yield of 96.0%. The product had a desirable crystal form and was in a gravel-like state.

### Example 3

50 g of isopropylamine was added into a 500 mL three-phase bottle, and 400 g of 1,2-dichloroethane was added according to a mass ratio of the isopropylamine to the 1,2-dichloroethane at 1:8. Stirring was conducted at 150 r/min, and 57 g of boron trifluoride gas was introduced at a gas flow rate of 0.5 kg/h to obtain a reaction system. Complexation was conducted at 0°C, and after solids appeared in the reaction system, the stirring was slowed down to 60 r/min to allow a product to get crystallized slowly. Since the boron trifluoride gas was introduced at the beginning, no solid was precipitated when the complexation was conducted for 5 h. An obtained product system was filtered (a resulting mother liquor was recycled), and an obtained solid material was dried at 50°C for 3 h to obtain 100.00 g of the solid product with a yield of 93.5%. The product had a desirable crystal form and was in a gravel-like state.

Table 1 showed product indexes in Examples 1 to 3.

**Table 1 Product indexes in Examples 1 to 3**

| Product sources | Product mass (g) | Yield (%) | Moisture content (wt%) | Boron trifluoride content (wt%) | Melting Point (°C) |
|---|---|---|---|---|---|
| Example 1 | 100.58 | 94.0% | 0.1261 | 50.3% | 100 |
| Example 2 | 102.70 | 96.0% | 0.1002 | 51.3% | 103 |
| Example 3 | 100.00 | 93.5% | 0.1106 | 50.0% | 98 |

As shown in Table 1, when the boron trifluoride-isopropylamine complex was prepared in Example 1, the amount of 1,2-dichloroethane added was lower, and the residual raw materials in the product could not be well removed, resulting in the residual raw materials left in the product. The low boiling point of the raw material caused self-dissolution, and the material was relatively viscous. In the actual production, the materials in the reactor might be hardened and coagulated, making it difficult to discharge. Moreover, the more viscous material might be difficult to dry. In addition, considering that the mother liquor produced during the filtering could be recycled, the amount of 1,2-dichloroethane added did not need to be too high to cause energy waste. When preparing the boron trifluoride-isopropylamine complex in Example 2 and Example 3, it was easy to dry. In Example 3, there was more 1,2-dichloroethane, and some raw materials were dissolved in the 1,2-dichloroethane without chemical reaction. This resulted in a higher loss of raw materials and thus a lower product yield.

### Example 4

50 g of isopropylamine was added into a 500 mL three-phase bottle, and 400 g of dichloromethane was added according to a mass ratio of the isopropylamine to the dichloromethane at 1:8. Stirring was conducted at 150 r/min, and 57 g of boron trifluoride gas was introduced at a gas flow rate of 0.3 kg/h to obtain a reaction system. Complexation was conducted at 0°C, and after solids appeared in the reaction system, the stirring was slowed down to 60 r/min to allow a product to get crystallized slowly. Since the boron trifluoride gas was introduced at the beginning, no solid was precipitated when the complexation was conducted for 5 h. An obtained product system was filtered (a resulting mother liquor was recycled), and an obtained solid material was dried at 50°C for 3 h to obtain 98.4 g of the solid product with a yield of 92.0%.

It can be known from the above examples that the preparation method provided by the present disclosure can synthesize the solid boron trifluoride-isopropylamine complex in one step. Moreover, the complex has desirable crystal form, high melting point, low production cost, broad market prospect, and considerable economic benefits.

The above descriptions are merely preferred implementations of the present disclosure. It should be noted that a person of ordinary skill in the art may further make several improvements and modifications without departing from the principle of the present disclosure, but such improvements and modifications should be deemed as falling within the protection scope of the present disclosure.

## Claims

1. A preparation method of a boron trifluoride-isopropylamine complex, comprising the following steps:
mixing isopropylamine with a chlorinated alkane to obtain an isopropylamine solution; and
introducing boron trifluoride into the isopropylamine solution, and conducting complexation to obtain the boron trifluoride-isopropylamine complex;
wherein the isopropylamine and the chlorinated alkane are at a mass ratio of 1:(2-10).

2. The preparation method according to claim 1, wherein the chlorinated alkane is selected from the group consisting of dichloromethane, 1,1-dichloroethane, and 1,2-dichloroethane.

3. The preparation method according to claim 1, wherein the isopropylamine and the boron trifluoride are at a molar ratio of 1:(0.95-1.05).

4. The preparation method according to claim 1 or 3, wherein the boron trifluoride is introduced at a gas flow rate of 0.3 kg/h to 80 kg/h.

5. The preparation method according to claim 1, wherein the complexation is conducted at - 10°C to 15°C for 3 h to 24 h.

6. The preparation method according to claim 1 or 5, wherein the complexation is conducted under stirring at 50 r/min to 200 r/min.

7. The preparation method according to claim 1, further comprising the following steps after the complexation is completed: subjecting a obtained product system obtained after the complexation to solid-liquid separation, and drying a resulting solid material to obtain the boron trifluoride-isopropylamine complex.

8. The preparation method according to claim 7, wherein the drying is conducted at 40°C to 80°C for 2 h to 5 h.

9. The preparation method according to claim 7, wherein an obtained liquid material after the solid-liquid separation is recycled.

## Patentansprüche

1. Ein Herstellungsverfahren für einen Bortrifluorid-Isopropylamin-Komplex, das die folgenden Schritte umfasst:
Mischen von Isopropylamin mit einem chlorierten Alkan, um eine Isopropylaminlösung zu erhalten; und
Einbringen von Bortrifluorid in die Isopropylaminlösung und Durchführen einer Komplexierung, um den Bortrifluorid-Isopropylamin-Komplex zu erhalten;
wobei das Isopropylamin und das chlorierte Alkan in einem Massenverhältnis von 1:(2-10) vorliegen.

2. Das Herstellungsverfahren nach Anspruch 1, wobei das chlorierte Alkan aus der Gruppe ausgewählt ist, die aus Dichlormethan, 1,1-Dichlorethan und 1,2-Dichlorethan besteht.

3. Das Herstellungsverfahren nach Anspruch 1, wobei das Isopropylamin und das Bortrifluorid in einem Molverhältnis von 1:(0,95-1,05) vorliegen.

4. Das Herstellungsverfahren nach Anspruch 1 oder 3, wobei das Bortrifluorid mit einer Gasflussrate von 0,3 kg/h bis 80 kg/h eingebracht wird.

5. Das Herstellungsverfahren nach Anspruch 1, wobei die Komplexierung bei -10 °C bis 15 °C für 3 h bis 24 h durchgeführt wird.

6. Das Herstellungsverfahren nach Anspruch 1 oder 5, wobei die Komplexierung unter Rühren bei 50 U/min bis 200 U/min durchgeführt wird.

7. Das Herstellungsverfahren nach Anspruch 1, das nach Abschluss der Komplexierung ferner die folgenden Schritte umfasst: Unterziehen eines nach der Komplexierung erhaltenen Produktsystems einer Fest-Flüssig-Trennung und Trocknen eines resultierenden festen Materials, um den Bortrifluorid-Isopropylamin-Komplex zu erhalten.

8. Das Herstellungsverfahren gemäß Anspruch 7, wobei das Trocknen bei 40 °C bis 80 °C für 2 h bis 5 h durchgeführt wird.

9. Das Herstellungsverfahren gemäß Anspruch 7, wobei ein nach der Fest-Flüssig-Trennung erhaltenes flüssiges Material recycelt wird.

## Revendications

1. Procédé de préparation d'un complexe de trifluorure de bore et d'isopropylamine, comprenant les étapes suivantes consistant à :
mélanger de l'isopropylamine avec un alcane chloré afin d'obtenir une solution d'isopropylamine ; et
introduire du trifluorure de bore dans la solution d'isopropylamine et procéder à une complexation afin d'obtenir le complexe de trifluorure de bore et d'isopropylamine ;
dans lequel l'isopropylamine et l'alcane chloré sont présents en un rapport en poids de 1/(2-10).

2. Procédé de préparation selon la revendication 1, dans lequel l'alcane chloré est choisi dans le groupe comprenant du dichlorométhane, du 1,1-dichloroéthane et du 1,2-dichloroéthane.

3. Procédé de préparation selon la revendication 1, dans lequel l'isopropylamine et le trifluorure de bore sont présents en un rapport molaire de 1/(0,95-1,05).

4. Procédé de préparation selon la revendication 1 ou 3, dans lequel le trifluorure de bore est introduit selon un débit de gaz allant de 0,3 kg/h à 80 kg/h.

5. Procédé de préparation selon la revendication 1, dans lequel la complexation est effectuée à une température allant de -10°C à 15°C pendant une durée allant de 3h à 24h.

6. Procédé de préparation selon la revendication 1 ou 5, dans lequel la complexation est effectuée sous agitation à une vitesse allant de 50 r/min à 200 r/min.

7. Procédé de préparation selon la revendication 1, comprenant en outre, après l'achèvement de la complexation, les étapes suivantes consistant à : soumettre un système de produits obtenu après la complexation à une séparation solide-liquide, et sécher un matériau solide résultant afin d'obtenir le complexe de trifluorure de bore et d'isopropylamine.

8. Procédé de préparation selon la revendication 7, dans lequel le séchage est effectué à une température allant de 40°C à 80°C pendant une durée allant de 2h à 5h.

9. Procédé de préparation selon la revendication 7, dans lequel un matériau liquide obtenu après la séparation solide-liquide est recyclé.
